# EUROPÄISCHE PATENTANMELDUNG

(11) **EP 4 753 112 A1**
(43) Veröffentlichungstag der Anmeldung: **03.06.2026**
(21) Anmeldenummer: 25218418.9
(22) Anmeldetag: 25.11.2025
(51) Int. Cl.: H02K 1/14, H02K 3/52

(54) **STATORANORDNUNG**

(30) Priorität: 29.11.2024 LU 509143
(71) Anmelder: WILO SE, 44263 Dortmund (DE)
(72) Erfinder: LYUDMYRSKY, Maksym, 44263 Dortmund (DE)
(74) Vertreter: Cohausz Hannig Borkowski Wißgott

(57) **Zusammenfassung**

Die Erfindung betrifft eine Statoranordnung (1) mit einem Statorpaket (2) und einer Anzahl konzentrischer Wicklungen (3), wobei das Statorpaket (2) einen Ring (4) und radial von diesem abstehende Polzähne (5) aufweist, die jeweils einen Polsteg (6), einen Polschuh (8), der an einem Ende des Polstegs (6) an diesen angeformt und in Umfangsrichtung breiter als der Polsteg (6) ist, und eine hinterschneidende Verbindungskontur (7) aufweist, die am anderen Ende an den Polsteg (6) angeformt ist, um den Polzahn (5) in einer Montagerichtung (F) axial formschlüssig in den Ring (4) einzuschieben, wobei die Wicklungen (3) jeweils auf einem Wicklungsträger (9) gewickelt sind, der den Polsteg (6) eines der Polzähne (5) umgibt. Jeder Wicklungsträger (9) weist an seiner dem Ring (4) zugewandten Außenseite (10) wenigstens einen keilförmigen Vorsprung (11) auf, der in Richtung entgegengesetzt zur Montagerichtung (F) in einem Maße stetig ansteigt, dass die radiale Dicke (H1) des Wicklungsträgers (9) in Bezug zum radialen Abstand (H2) zwischen dem entsprechenden Polschuh (8) und dem Ring (4) vergrößert ist. Der Vorsprung (11) wird beim Einschieben der aus Wicklungsträger (9) und Polzahn (5) gebildeten Baugruppe in den Ring (4) zumindest teilweise von einer Kante (12) des Rings (4) abgeschert und der Wicklungsträger (9) gegen den entsprechenden Polschuh (8) gedrückt, so dass er im Presssitz und vibrationsfrei angeordnet ist.

## Beschreibung

Die Erfindung betrifft eine Statoranordnung mit einem Statorpaket und einer Anzahl konzentrischer Wicklungen, wobei das Statorpaket einen Ring und radial von diesem abstehende Polzähne aufweist, die jeweils einen Polsteg, einen Polschuh, der an einem rotorseitigen Ende des Polstegs an den Polsteg angeformt und in Umfangsrichtung breiter als der Polsteg ist, und eine hinterschneidende Verbindungskontur aufweisen, die an dem dem rotorseitigen Ende gegenüberliegende Ende des Polstegs an den Polsteg angeformt ist, um den Polzahn in einer Montagerichtung in den Ring axial formschlüssig einzuschieben, wobei die Wicklungen jeweils auf einem Wicklungsträger gewickelt sind, der den Polsteg eines der Polzähne umgibt.

Statoranordnungen dieser Art sind allgemein bekannt. Figuren 1 bis 3 zeigen eine solche Statoranordnung 1. Sie finden beispielsweise Anwendung in elektronisch kommutierten Elektromotoren mit permanentmagnetischem Rotor. Der in der Regel aus einem Paket einzelner Bleche bestehende Ring 4 dient dem magnetischen Rückschluss in Umfangsrichtung, während die ebenfalls regelmäßig geblechten Polzähne 5 den magnetischen Fluss radial führen. Die Polzähne 5 erstrecken sich jeweils durch einen Wicklungsträger 9 hindurch, der hierfür ringförmig ist, umgebend eine im Wesentlichen längliche rechteckige Öffnung 15 für den Polsteg 6 des Polzahns 5, siehe Figuren 2 und 3.

Die Herstellung der Statoranordnung 1 erfolgt derart, dass die aus einem isolierenden Kunststoff hergestellten Wicklungsträger 9 auf die vom Ring 4 des Statorpakets 2 unabhängigen Polzähne 5 aufgeschoben und anschließend bewickelt werden. Dies erfolgt in einer Wickelmaschine, in der die Polzähne 5 für den Wickelvorgang gehalten sind. Die Polzähne 5 können dabei bereits in einer solchen ringförmigen Anordnung positioniert sein, wie sie sie in der Statoranordnung 1 einnehmen. Alternativ können die Polzähne 1 miteinander beweglich verbundene Glieder einer Kette bilden, die während des Wickelns linear ausgerichtet ist und anschließend zu einem Ring geschlossen wird. Nach der Bewicklung liegt dann eine Baugruppe aus Polzähnen 5 mit bewickelten Wicklungsträgern 9 vor, die in ihrer Gesamtheit axial in den Ring 4 eingeschoben wird.

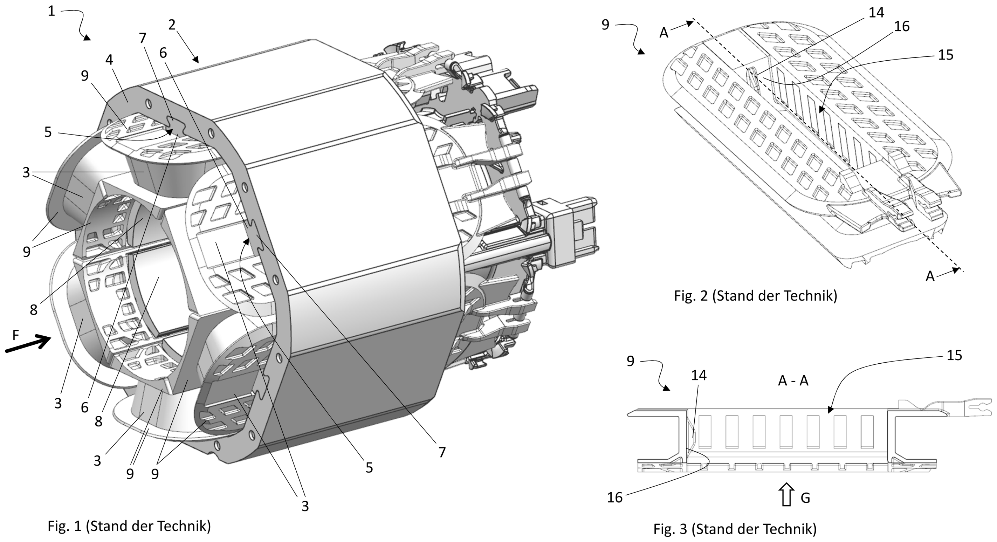

Zur kraftschlüssigen Fixierung der Wicklungsträger 9 an den Polzähnen 5 ist es außerdem bekannt, eine Klemmrippe 14 vorzusehen, die von der die Öffnung 15 des Wickelträgers 9 begrenzenden Innenseite 16 in Richtung der Längserstreckung der Öffnung 15 vorsteht. Diesen Stand der Technik zeigen Figuren 2 bis 3. Die Klemmrippe 14 ist hier im Querschnitt entlang einer Axialebene, in der die Längsachse des Wicklungsträgers 9 liegt, welche nach der bestimmungsgemäßen Montage des Wicklungsträgers 9 in der Statoranordnung 1 parallel zur Statorachse verläuft, im Wesentlichen trapezförmig.

Durch das Aufsetzen des Wicklungsträgers 9 auf den Polzahn 5 bzw. anders betrachtet, das Einsetzen des Polzahns 5 in die Öffnung 15 in Fügerichtung G rechtwinklig zur Öffnung 15, wird die Klemmrippe 14 von der scharfen Außenkante des Polzahns 5, genauer betrachtet, von der Außenkante der Verbindungskontur 7 des am Wicklungsträger 9 zur Anlage gelangenden äußeren Bleches, abgeschert, wodurch ein Span entsteht. Die Vielzahl solcher Einsetzvorgänge erzeugt folgemäßig eine Vielzahl abgescherter Späne, die die Wickelmaschine verschmutzen, da dieses Einsetzen dort erfolgt. Die Späne bergen nicht nur die Gefahr eines technischen Fehlers in der Wickelmaschine, sie müssen auch regelmäßig abgesaugt werden, wodurch ein zusätzlicher Arbeitsaufwand und eine zusätzliche Saugvorrichtung benötigt werden.

Des Weiteren hat sich nach einer längeren Betriebszeit von Statoranordnungen der genannten Art gezeigt, dass eine Geräuschemission entstehen kann, die von Vibrationen herrührt, welche möglicherweise auf eine Relativbewegung zwischen Wicklung, bzw. deren Wicklungsträger, und Polzahn, d.h. auf eine zu geringe kraftschlüssige Verbindung (Klemmung) zwischen dem Wicklungsträger 9 und dem Polzahn 5 zurückgeht.

Es ist deshalb einerseits Aufgabe der vorliegenden Erfindung, die Entstehung von Spänen in der Wickelmaschine zu verhindern und andererseits das Risiko einer Geräuschentstehung durch vibrierende Wicklungen zu minimieren.

Diese Aufgabe wird durch eine Statoranordnung mit den Merkmalen des Anspruchs 1 gelöst. Vorteilhafte Weiterbildungen sind in den Unteransprüchen angegeben und werden nachfolgend erläutert.

Erfindungsgemäß wird vorgeschlagen, eine Statoranordnung der in der Einleitung genannten Art dahingehend weiterzubilden, dass jeder Wicklungsträger an seiner bei bestimmungsgemäßer Montage dem Ring zugewandten Außenseite wenigstens einen keilförmigen Vorsprung aufweist, der in Richtung entgegengesetzt zur Montagerichtung in einem Maße stetig ansteigt, dass die radiale Dicke des Wicklungsträgers in Bezug zum radialen Abstand zwischen dem entsprechenden Polschuh und dem Ring durch den keilförmigen Vorsprung vergrößert ist, so dass der Vorsprung beim Einschieben der aus Wicklungsträger und Polzahn gebildeten Baugruppe in den Ring zumindest teilweise von einer Kante des Rings, insbesondere spanbildend, abgeschert und der Wicklungsträger gegen den entsprechenden Polschuh gedrückt wird.

Durch den erfindungsgemäßen keilförmigen Vorsprung ist der Wicklungsträger fest zwischen dem Ring und dem Polschuh eingeklemmt, so dass es im Betrieb zu keiner Relativbewegung zwischen Wicklungsträger und Polzahn, und damit auch zu keiner Geräuschemission kommen kann. Zudem entstehen etwaig abgescherte Späne im Herstellungsverfahren zu einem späteren Zeitpunkt, d.h. nicht in der Wickelmaschine, sondern erst dann, wenn die Statorzähne samt Wicklungen in den Ring axial eingeschoben werden. Somit kann auf eine Absaugung in der Wickelmaschine verzichtet werden und es besteht kein Risiko mehr, dass die Wickelmaschine aufgrund eines Spans einen technischen Fehler erleidet.

Die maximale Höhe des keilförmigen Vorsprungs kann zwischen 0,8 mm bis 1 mm betragen. Hierdurch werden einerseits Toleranzen ausgeglichen und andererseits wird die Größe des entstehenden Spans minimiert.

Der keilförmige Vorsprung kann einen Grundriss aufweisen, dessen Längsmittelachse sich parallel zur Statorachse erstreckt. Ferner kann die Breite des keilförmigen Vorsprungs in Umfangsrichtung über seine axiale Länge konstant sein, insbesondere zwischen 0,5 mm und 5 mm betragen. Mit anderen Worten weist der Vorsprung parallele Längsseitenwände und einen rechteckigen Grundriss auf.

Ideal ist es, wenn der keilförmige Vorsprung einen Neigungswinkel zwischen 5° und 9° zur Außenseite des Wicklungsträgers aufweist. Er ist also vergleichsweise gering. Hierdurch wird erreicht, dass die Kraft zum Einschieben der aus Polzahn und Wicklung samt Wicklungsträger gebildeten Baugruppe in den Kern möglichst gering ist, während die Spannkraft, mit der der Wicklungsträger zwischen den Ring und den Polschuh gepresst ist, möglichst groß ist.

Vorzugsweise weist der keilförmige Vorsprung eine ebene Oberfläche auf. Da die abscherende Kante des Kerns einen Kreisabschnitt beschreibt, wird hierdurch bewirkt, dass der Vorsprung an der oder den Seitenkante(n) der schrägen, ebenen Oberfläche zuerst abgeschert wird, wodurch sich der anfängliche Widerstand beim Abscheren und damit die erforderliche Einschiebekraft oder Einpresskraft verringert. Der Widerstand und die notwendige Einschiebe- oder Einpresskraft vergrößern sich zunehmend mit fortschreitender Einschiebetiefe.

Von Vorteil ist es, wenn der keilförmige Vorsprung so am Wicklungsträger angeordnet bzw. positioniert ist, dass er im eingeschobenen Zustand des Wicklungsträgers in das Statorpaket teilweise vom Statorpaket vorsteht. Mit anderen Worten ist der keilförmige Vorsprung nicht mit seiner gesamten Länge in das Statorpaket geschoben. Dies hat den Vorteil, dass ein abgescherter Span nicht vom keilförmigen Vorsprung getrennt wird, sondern in der Art eines Grates an dem außen vor dem Kern verbleibenden Teil des Vorsprungs verbunden verbleibt. Somit entstehen bei der Montage der Wicklungs-Polzahn-Baugruppe im Kern keine Späne mehr. Es sei angemerkt, dass vor diesem Hintergrund der Begriff "abgeschert" auch eine Teilabscherung umfasst und nicht bedeutet, dass ein Span unbedingt vom keilförmigen Vorsprung gelöst wird.

Geeigneterweise weist der keilförmige Vorsprung eine Abflachung auf, die seine maximale Höhe definiert. Infolge der Abflachung wird das Volumen des beim Abscheren entstehenden Spans verringert. Der Span wird also kleiner.

Weiter ist es von Vorteil, wenn der Wicklungsträger zwei keilförmige Vorsprünge aufweist, die in Umfangsrichtung beidseits eines Polzahns symmetrisch angeordnet sind. Dies bewirkt, dass der Wicklungsträger auf beiden Seiten des Polstegs zwischen den Kern und den Polschuh gepresst wird.

Des Weiteren können die beiden keilförmigen Vorsprünge hinsichtlich ihrer Form und Größe identisch sein, so dass der Wicklungsträger auf beiden Seiten des Polstegs mit gleicher Kraft zwischen den Kern und den Polschuh gepresst wird.

Die Erfindung betrifft auch einen Elektromotor, insbesondere einen elektronisch kommutierten Gleichstrommotor mit einer erfindungsgemäßen Statoranordnung. Vorzugsweise ist der Elektromotor Teil eines Kreiselpumpenaggregats, insbesondere in Nassläuferbauweise.

Weitere Merkmale, Vorteile und Eigenschaften der Erfindung werden nachfolgend anhand eines Ausführungsbeispiels und der beigefügten Figuren erläutert. In den Figuren bezeichnen Bezugszeichen stets dieselben oder äquivalente Komponenten, Bereiche, Richtungs- oder Ortsangaben.

Der Begriff "axial" bezieht sich im Rahmen der vorliegenden Beschreibung auf eine Richtung in Richtung der Achse der Statoranordnung oder parallel dazu, während sich der Begriff "radial" auf eine Richtung rechtwinklig zur Achse der Statoranordnung bezieht, sofern nicht im Einzelnen etwas anderes angegeben ist.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:
- Figur 1:: eine Statoranordnung mit konzentrischen Wicklungen nach dem Stand der Technik in perspektivischer Darstellung
- Figur 2:: einen Wicklungsträger der Statoranordnung nach Figur 1 in perspektivischer Darstellung
- Figur 3:: den Wicklungsträger nach Figur 2 in einer Querschnittsdarstellung entlang des axialen Längsschnitts A-A in Figur 2.

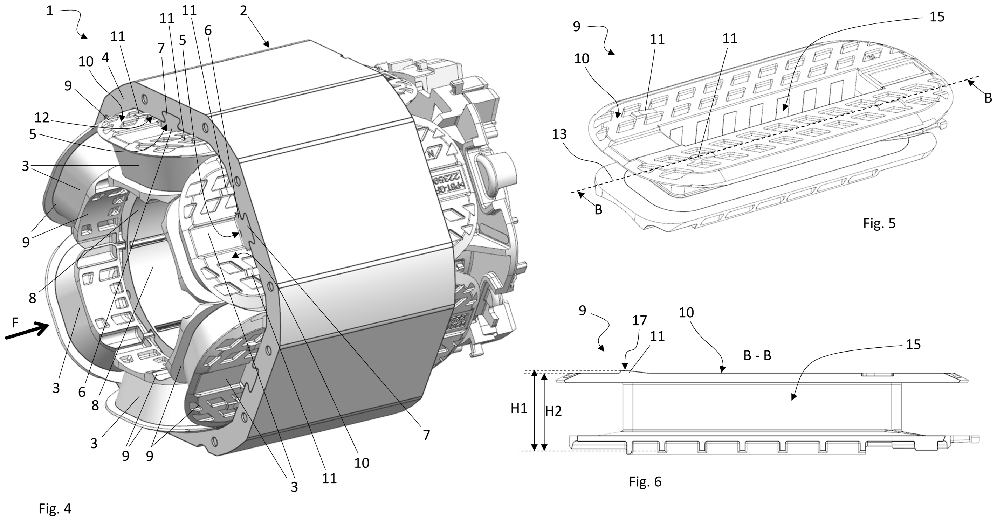

- Figur 4:: eine Statoranordnung mit konzentrischen Wicklungen nach der Erfindung in perspektivischer Darstellung
- Figur 5:: einen Wicklungsträger der Statoranordnung nach Figur 4 in perspektivischer Darstellung
- Figur 6:: den Wicklungsträger nach Figur 5 in einer Querschnittsdarstellung entlang des zur Längsachse parallelen Längsschnitts B-B in Figur 5.

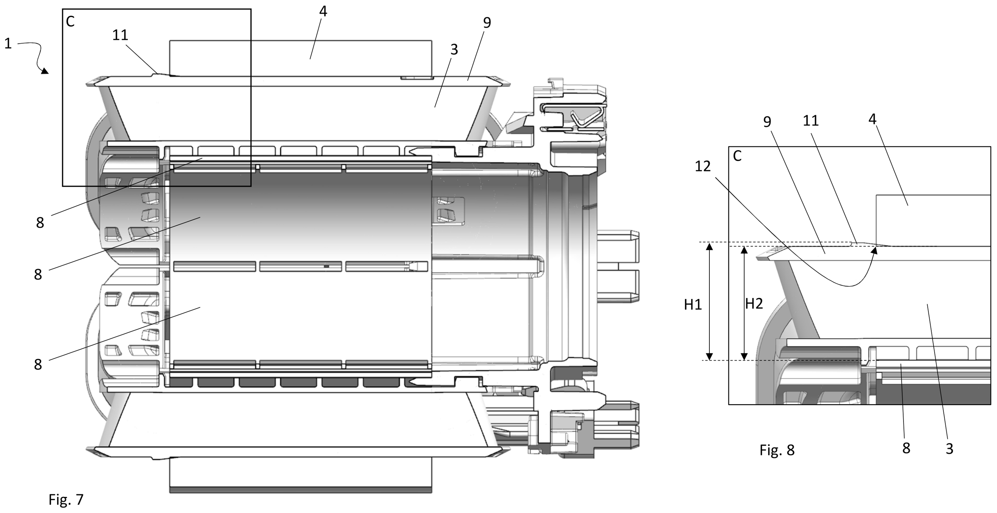

- Figur 7:: die Statoranordnung aus Figur 4 in einem axialen Längsschnitt
- Figur 8:: eine Vergrößerung des Ausschnitts C in Figur 7

Wie in der Beschreibungseinleitung bereits erläutert, zeigen Figuren 1 bis 3 eine Statoranordnung 1 nach dem Stand der Technik, mit einem Statorpaket 2 und einer Anzahl konzentrischer Wicklungen 3, wobei diese Statoranordnung 1 beispielhaft sechs Wicklungen 3 aufweist. Der Rotor ist nicht dargestellt. Die Statoranordnung 1 ist Teil eines Elektromotors, der wiederum Teil eines Kreiselpumpenaggregats, insbesondere in Nassläuferbauweise sein kann.

Das Statorpaket 2 ist durch Ring 4 und radial von diesem abstehende Polzähne 5 gebildet, wobei die Polzähne 5 vom Ring 4 baulich unabhängig sind. Sie umfassen jeweils einen Polsteg 6, einen Polschuh 8 und eine Verbindungskontur 7. Der Polschuh 8 ist an einem rotorseitigen Ende des Polstegs 6 an den Polsteg 6 angeformt und in Umfangsrichtung breiter als der Polsteg, so dass die Wicklungen 3 auf den Polschuhen 8 aufliegen. Die Verbindungskontur 7 ist an dem dem rotorseitigen Ende gegenüberliegenden Ende des Polstegs 6 an den Polsteg 6 angeformt. Sie dient der mechanischen Verbindung des Polzahns 5 mit dem Ring 4 und weist hierzu in radialer Richtung eine Hinterschneidung auf. Genauer gesagt ist die Verbindungkontur 7 in Gestalt einer Schwalbenschwanzverbindung ausgeführt, um die formschlüssige Verbindung zwischen dem Polzahn 5 und im Ring 4 zu erzeugen. Die Montage der Polzähne 5 am Ring 4 erfolgt somit durch axiales Fügen in Richtung der Montagerichtung F, d.h. in Richtung parallel zur Statorachse. Das Statorpaket 2 besteht aus einem Stapel einzelner Bleche, die in Figur 1 allerdings nicht einzeln dargestellt sind, sondern als Gesamtpaket. Die Wicklungen 3 sind jeweils auf einen Wicklungsträger 9 gewickelt, der den Polsteg 6 eines Polzahns 5 umgibt. Mit anderen Worten erstreckt sich der Polsteg 6 durch eine im Wesentlichen rechteckige Öffnung 15 des Wicklungsträgers hindurch.

Figuren 2 und 3 zeigen eine Klemmrippe 14, die von der schmalen, die Öffnung 15 begrenzenden Innenseite 16 des Wicklungsträgers 9 in axialer Richtung vorsteht. Diese Klemmrippe 14 wird beim Aufsetzen des Wicklungsträgers 9 auf den Polzahn 5 vom Polzahn 5 unter Spanbildung abgeschert, wobei der Polzahn in der Öffnung 15 klemmend gehalten wird. Das Aufsetzen des Wicklungsträgers 9 erfolgt in der Wickelmaschine, so dass die abgescherten Späne dort anfallen und abgesaugt werden müssen, da sie den Wicklungsvorgang, d.h. das Aufwickeln des Drahts auf den Wicklungsträger 9 beeinträchtigen können. Des Weiteren ist nicht sichergestellt, dass die Klemmrippe 14 den Polzahn 14 so fixiert, dass es im Betrieb des Elektromotors zu keiner Relativbewegung zwischen dem Wicklungsträger 9 und dem Polzahn 5 kommt. Eine solche Relativbewegung kann zu einer Geräuschentwicklung führen.

Für beide Nachteile schafft die vorliegende Erfindung Abhilfe, von der eine Ausführungsvariante in den Figuren 4 bis 8 gezeigt ist.

Figur 4 zeigt eine erfindungsgemäße Statoranordnung 1, die sich von derjenigen in Figur 1 darin unterscheidet, dass jeder Wicklungsträger 9 an seiner bei bestimmungsgemäßer Montage dem Ring 4 zugewandten Außenseite 10 wenigstens einen keilförmigen Vorsprung 11 aufweist. Dieser Vorsprung 11 steigt in Richtung entgegengesetzt zur Montagerichtung F in einem Maße stetig an, dass die radiale Dicke H1 des Wicklungsträgers 9 in Bezug zum radialen Abstand H2 zwischen dem entsprechenden Polschuh 8 und dem Ring 4 durch den keilförmigen Vorsprung 11 vergrößert wird. Die radiale Dicke H1 des Wicklungsträgers 9 ist somit größer als der radiale Abstand H2 zwischen dem Polschuh 8 und dem Ring 4, wie Figuren 6 und 8 veranschaulichen. Dies bewirkt, dass der Vorsprung 11 beim Einschieben der aus Wicklungsträger 9 und Polzahn 5 gebildeten Baugruppe in den Ring 4 zumindest teilweise von einer Kante 12 des Rings 4 abgeschert und der Wicklungsträger 9 gegen den entsprechenden Polschuh 8 gedrückt wird. In Figur 8 ist das Volumen erkennbar, dass der Ring 4 vom Vorsprung 11 abschert. Es ist durch den Überlappungsbereich zwischen Ring 4 und Vorsprung 11 gebildet.

Die Höhe des keilförmigen Vorsprungs 11 beträgt in der dargestellten Ausführungsvariante ca. 0,3 mm. Um diese Höhe ist die radiale Dicke H1 des Wicklungsträgers 9 größer als der radiale Abstand H2 zwischen dem Polschuh 8 und dem Ring 4.

Der keilförmige Vorsprung 11 weist einen Grundriss auf, dessen Längsmittelachse 13 sich parallel zur Statorachse erstreckt, wie insbesondere Figur 5 zeigt. Die Breite des keilförmigen Vorsprungs 11 ist in Umfangsrichtung über seine axiale Länge konstant. Sie beträgt ca. 1,1 mm.

Zur Außenseite 10 hat der keilförmige Vorsprung 11 einen Neigungswinkel, oder Steigung, von ca. 7°. Zudem ist seine Oberfläche eben.

Wie Figuren 4, 7 und 8 zeigen, ist der Vorsprung 11 so am Wicklungsträger 9 angeordnet, dass er im eingeschobenen Zustand des Wicklungsträgers 9 in das Statorpaket 2 teilweise vom Statorpaket 2 axial vorsteht, also nicht vollständig unter das Statorpaket 2 geschoben ist. Dies bewirkt, dass sich der beim Abscheren bildende Span nicht loslöst, sondern am axial vor dem Ring 4 verbleibenden Teil des Vorsprungs 11 mit diesem verbunden bleibt.

Der keilförmige Vorsprung 11 weist außerdem eine Abflachung 14 auf, die seine maximale Höhe definiert. Figuren 4 bis 8 lassen erkennen, dass jeder Wicklungsträger 9 zwei identische der beschriebenen keilförmigen Vorsprünge 11 aufweist, und zwar in Umfangsrichtung beidseits eines Polzahns 5 in symmetrischer Anordnung, damit der Wicklungsträger beidseitig des Polstegs gleichmäßig zwischen den Ring 4 und den Polschuh gedrückt wird.

Es sei angemerkt, dass die Erfindung auch bei Statoranordnungen von Elektromotoren mit einem Außenläufer Anwendung finden kann.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Statoranordnung (1) mit einem Statorpaket (2) und einer Anzahl konzentrischer Wicklungen (3), wobei das Statorpaket (2) einen Ring (4) und radial von diesem abstehende Polzähne (5) aufweist, die jeweils einen Polsteg (6), einen Polschuh (8), der an einem rotorseitigen Ende des Polstegs (6) an den Polsteg (6) angeformt und in Umfangsrichtung breiter als der Polsteg (6) ist, und eine hinterschneidende Verbindungskontur (7) aufweist, die an dem dem rotorseitigen Ende gegenüberliegenden Ende des Polstegs (6) an den Polsteg (6) angeformt ist, um den Polzahn (5) in einer Montagerichtung (F) axial formschlüssig in den Ring (4) einzuschieben, wobei die Wicklungen (3) jeweils auf einem Wicklungsträger (9) gewickelt sind, der den Polsteg (6) eines der Polzähne (5) umgibt, **dadurch gekennzeichnet, dass** jeder Wicklungsträger (9) an seiner bei bestimmungsgemäßer Montage dem Ring (4) zugewandten Außenseite (10) wenigstens einen keilförmigen Vorsprung (11) aufweist, der in Richtung entgegengesetzt zur Montagerichtung (F) in einem Maße stetig ansteigt, dass die radiale Dicke (H1) des Wicklungsträgers (9) in Bezug zum radialen Abstand (H2) zwischen dem entsprechenden Polschuh (8) und dem Ring (4) durch den keilförmigen Vorsprung (11) vergrößert ist, so dass der Vorsprung (11) beim Einschieben der aus Wicklungsträger (9) und Polzahn (5) gebildeten Baugruppe in den Ring (4) zumindest teilweise von einer Kante (12) des Rings (4) abgeschert und der Wicklungsträger (9) gegen den entsprechenden Polschuh (8) gedrückt wird.

2. Statoranordnung (1) nach Anspruch 1, **dadurch gekennzeichnet, dass** die Höhe des keilförmigen Vorsprungs (11) 0,8 mm bis 2 mm beträgt.

3. Statoranordnung (1) nach Anspruch 1 oder 2, **dadurch gekennzeichnet, dass** der keilförmige Vorsprung (11) einen Grundriss aufweist, dessen Längsmittelachse (13) sich parallel zur Statorachse erstreckt.

4. Statoranordnung (1) nach einem der vorhergehenden Ansprüche **dadurch gekennzeichnet, dass** die Breite des keilförmigen Vorsprungs (11) in Umfangsrichtung über seine axiale Länge konstant ist, insbesondere zwischen 0,5 mm und 5 mm beträgt.

5. Statoranordnung (1) nach einem der vorherigen Ansprüche, **dadurch gekennzeichnet, dass** der keilförmige Vorsprung (11) einen Neigungswinkel zwischen 5° und 9° zur Außenseite (10) des Wicklungsträgers (9).

6. Statoranordnung (1) nach einem der vorherigen Ansprüche, **dadurch gekennzeichnet, dass** der keilförmige Vorsprung (11) eine ebene Oberfläche aufweist.

7. Statoranordnung (1) nach einem der vorherigen Ansprüche, **dadurch gekennzeichnet, dass** der keilförmige Vorsprung (11) so am Wicklungsträger (9) angeordnet ist, dass er im eingeschobenen Zustand des Wicklungsträgers (9) in das Statorpaket (2) teilweise vom Statorpaket (2) vorsteht.

8. Statoranordnung (1) nach einem der vorherigen Ansprüche, **dadurch gekennzeichnet, dass** der keilförmige Vorsprung (11) eine Abflachung (17) aufweist, die seine maximale Höhe definiert.

9. Statoranordnung (1) nach einem der vorherigen Ansprüche, **dadurch gekennzeichnet, dass** der Wicklungsträger (9) zwei keilförmige Vorsprünge (11) aufweist, die in Umfangsrichtung beidseits eines Polzahns (5) symmetrisch angeordnet sind.

10. Statoranordnung (1) nach Anspruch 9, **dadurch gekennzeichnet, dass** die beiden keilförmigen Vorsprünge (11) hinsichtlich ihrer Form und Größe identisch sind.
